# EUROPEAN PATENT SPECIFICATION

(11) **EP 2 560 497 B1**
(45) Date of publication and mention of the grant of the patent: **26.07.2017**
(21) Application number: 11720194.7
(22) Date of filing: 19.04.2011
(51) Int. Cl.: A22C 21/00, B65G 17/20, B65G 47/244

(54) **TURNING BLOCK ALIGNMENT**
AUSRICHTANORDNUNG FÜR DREHBLOCK
DISPOSITIF D'ALIGNEMENT POUR BLOC ROTATIF

(30) Priority: 19.04.2010 NL 2004573; 26.01.2011 NL 2006075
(43) Date of publication of application: 27.02.2013
(73) Proprietor: Foodmate B.V., 3261 LK Oud-Beijerland (NL)
(72) Inventor: HAZENBROEK, Jacobus, Eliza, NL-3261 LK Oud-Beijerland (NL)
(74) Representative: V.O.
(86) International application number: PCT/NL2011/050268
(87) International publication number: WO 2011/133029

(56) References cited:
- EP-A1- 0 444 782
- DE-T2- 60 316 104
- US-A- 4 180 152
- US-B1- 6 179 702

## Description

The invention relates to a conveyor having rotatable suspension hangers. In particular the invention is relevant to such rotatable suspension hangers as used in processing lines for slaughtered animals, to suspend the animal carcasses by their legs for movement past subsequent processing stations.

Such suspension hooks are in common use on poultry and fowl processing lines. Suitable examples are described in document US 6 179 702 B1 and also in document EP 0786208, which discloses a shackle for suspending poultry by their legs for movement by a conveyor track of a poultry processing line along individual processing stations. Thereby a trolley assembly is supported and guided along a conveyor track and moved there along by a transport chain. The poultry suspension hooks are rotatably mounted to the trolley and an associated turning gear is adapted to cooperate with means along the track to rotate the poultry suspension hooks in predetermined rotary positions. At the location of individual processing stations the turning gear is usually retained between opposite parallel side guides to inhibit any rotation when the suspended poultry carcass is processed at an individual processing station. In between the processing stations these parallel side guides may be interrupted. The side guides are also interrupted where the turning gear is engaged by means to effect its rotation. To this end the turning gear, which is a substantially square body, has slots extending inwardly from its corners. These slots are engageable by a turning pin positioned along the conveyor path. A yieldable indexing arrangement between the trolley and the turning gear ensures that the rotary position is retained when moving further along the track. This is of particular importance at locations where the lateral side guides are interrupted.

Usually the yieldable indexing means - such a spring biased ball and socket assembly with opposite cavities and recesses for holding and receiving the ball and spring between the relatively rotatable parts - are effective to keep the turning blocks in their rotated positions between treatment stations. However given the open arrangement of, in particular, poultry processing lines, a risk cannot be excluded that accidental external obstructions in the path of the conveyor may unintentionally alter the rotational position of a turning block in-between treatment stations. Should this occur and remain undetected a wrongly positioned suspension hanger may cause damage to a treatment stations, or at least result in a treated product that is defective.

Accordingly it is an object of the present invention to propose turning block alignment for an overhead conveyor. In a more general sense it is an object of the invention to overcome or ameliorate at least one of the disadvantages of the prior art. It is also an object of the present invention to provide alternative structures which are less cumbersome in assembly and operation and which moreover can be made relatively inexpensively. Alternatively it is an object of the invention to at least provide the public with a useful choice.

To this end the invention provides for a conveyor as defined in one or more of the appended claims. The conveyor according to the invention thus includes a turning block alignment device that may be arranged upstream of a treatment station and thereby protect this treatment station for possible damage or malfunction due to a wrongly positioned suspension hanger.

The invention also provides a conveyor for moving and positioning objects along a conveyor path, the conveyor comprise: a conveyor rail extending along the conveying path; at least one carriage movable along the conveyor rail; an article support rotatably mounted with respect to the carriage; a turning block associated with the article support, rotation of the turning block causing corresponding rotation of the article support; an aligning station in the path of the turning block for rotating the turning block and article support to a predetermined orientation; the turning block having a first disk with a first perimeter contour and a second disk with a second perimeter contour, and the aligning station including features for selectively engaging at least the second disk as the turning block moves through the aligning station to rotate the article support into the predetermined orientation.

Conveyors according to the invention are in particular suitable for moving animal carcasses in spaced sequential relationship along a processing path, when the conveyor comprises at least: an elongated rail extending along the processing path; a plurality of carriages mounted for movement along the rail; a drive member for moving the plurality of carriages along processing path; each carriage including a turning block rotatable between indexed positions with respect to the processing path; a shackle depending from and rotatable with each turning block, each shackle being configured to hold an animal carcass suspended therefrom; an aligning station disposed along the processing path in substantial alignment with the turning blocks of carriages moving along the processing path; and features associated with the aligning station for selectively engaging the turning blocks of carriages moving through the aligning station in such a way that the turning blocks and shackles emerge from the aligning station in a single predetermined orientation regardless of their orientations when entering the aligning station. A method of orienting a poultry shackle depending from a conveyor carriage to a predetermined orientation as the poultry shackle moves along a processing path may also be contemplated, the method comprising the steps of: (i) moving the conveyor carriage through an aligning station located along the processing path; (ii) if the poultry shackle is in the predetermined orientation upon entering the aligning station, allowing the poultry shackle to pass through the aligning station unaffected to emerge from the aligning station in the predetermined orientation; and (iii) if the poultry shackle is not in the predetermined orientation upon entering the aligning station, rotating the poultry shackle between a predetermined number of indexed orientations within the aligning station until the poultry shackle is oriented in and emerges from the aligning station in the predetermined orientation.

In one advantageous arrangement a conveyor assembly is provided for conveying articles along processing stations including a conveyor in accordance with the invention in combination at least one carriage and associated article support that includes a trolley for engagement by the conveyor; a shackle configured to support an article, and rotatable with respect to the trolley; a turning block associated with the shackle, rotation of the turning block with respect to the trolley causing corresponding rotation of the shackle relative to the trolley; and yieldable indexing means operatively arranged between the trolley and the turning block to define at least a first and a second incremental rotational position for the shackle, in which the yieldable indexing means are biased into engagement by magnetic forces.

Accordingly a conveyor is disclosed for moving and positioning objects along a conveyor path. The conveyor includes a conveyor rail extending along the conveyor path and at least one carriage having a rotatable article support mounted for movement along the conveyor rail. A turning block associated with the rotatable article support facilitates rotatable movement of the article support when the turning block is rotated. The conveyor further includes an aligning station for rotating the article support into a predetermined position when the turning block passes through the aligning station as the article support moves through the aligning station. The turning may be formed with a first disk with a first perimeter contour and a second disk with a second perimeter contour. The alignment station has projections in the form of pins for engaging the second disk as needed for rotating the turning block and article support between indexed orientations until the article support is oriented in a predetermined desired orientation. The article support may be a poultry shackle for suspending poultry carcasses and moving them along the conveyor path.

Further advantageous aspects of the invention will become clear from the appended claims and from the following description of preferred embodiments.
Figure 1 is a partial perspective view of a conveyor according to the invention;
Figure 2 is an exploded view of a rotatable article support and turning block as used in the conveyor of Figure 1;
Figure 3 is an exploded view of a first embodiment of a turning block for use in the rotatable article support of Figure 2;
Figures 4A-4C are schematic views showing the various options provided by the aligning station;
Figures 5A-5B are schematic views showing the turning station options for left hand and right hand rotations;
Figure 6 is an exploded perspective illustration of a rotatable article support;
Figure 7 is a cross section of the exploded perspective illustration of Figure 6;
Figure 8 is a side elevation in ghost view of the article support of Figures 6 and 7;
Figure 9 is a rear elevation in ghost view of the article support of Figures 6, 7 and 8;
Figure 10 shows a first arrangement of turning pins in relation to a first output position for the article support;
Figure 11 shows a second arrangement of turning pins in relation to a second output position of the article support;
Figure 12 shows a third arrangement of turning pins in relation to a third output position for the article support; and
Figure 13 shows a fourth arrangement of turning pins in relation to a fourth output position for the article support.

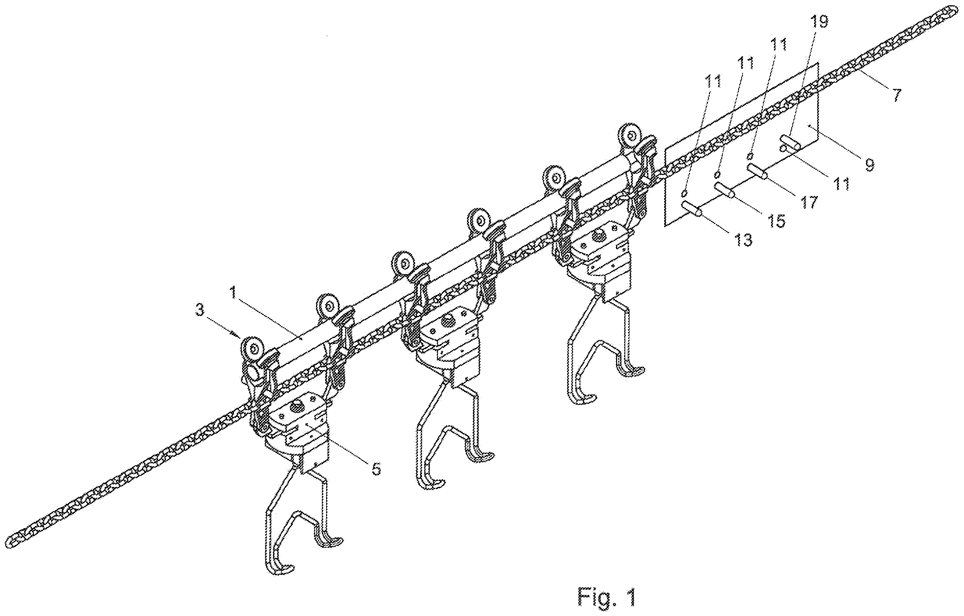

Referring first to Figure 1 there is shown a conveyor rail 1 that here takes the form of a pipe or rod. Guided for movement along the rail 1 are pairs of trolleys 3 carrying individual carriages 5. The trolleys 3 are interconnected by a chain 7, which pulls the trolleys 3 and carriages 5 along the rail 1. Positioned along a conveying path defined by the rail 1 is a combined aligning and turning station 9. The aligning and turning station 9 may be provided with rows of openings 11 in two levels, one above the other. The openings 11 may each optionally receive a respective first, second, third or fourth turning pin 13, 15, 17, 19, for a purpose explained herein below.

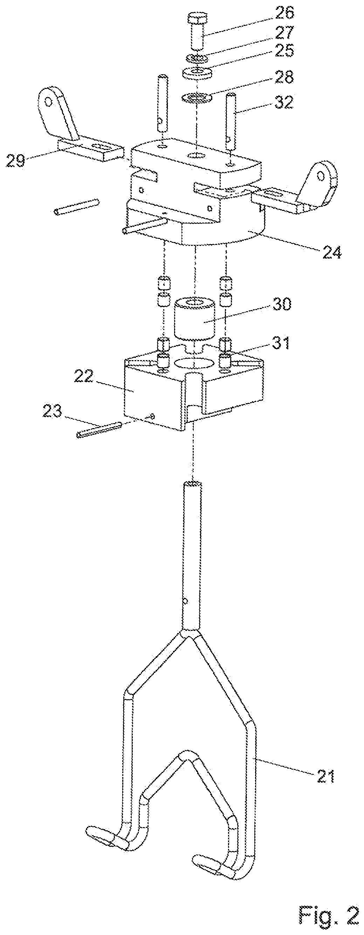

Figure 2 shows the rotatable article support of the carriage 5 in an exploded arrangement. A suspension shackle 21 is non-rotatably connected to turning block 22. A retention pin 23 is inserted through both the shackle 21 and the turning block 22 to obtain the non-rotatable connection. A carriage block 24 rotatably receives the turning block 22 by means of a bolt 26 and various washers 25, 27 and 28. The bolt 26 thereby engages bushing 30 that affixes to the the turning block 22. The carriage block 24 is suspended from the trolleys (only shown in Figure 1), by trolley brackets 29. Each trolley bracket 29 is secured in a slot in the carriage block 24 and affixed by a respective securing pin 32. The turning block 22 can be retained in indexed positions with respect to the carriage block 24, by indexing means in the form of magnets 31 or equivalent indexing means, such as a ball and spring.

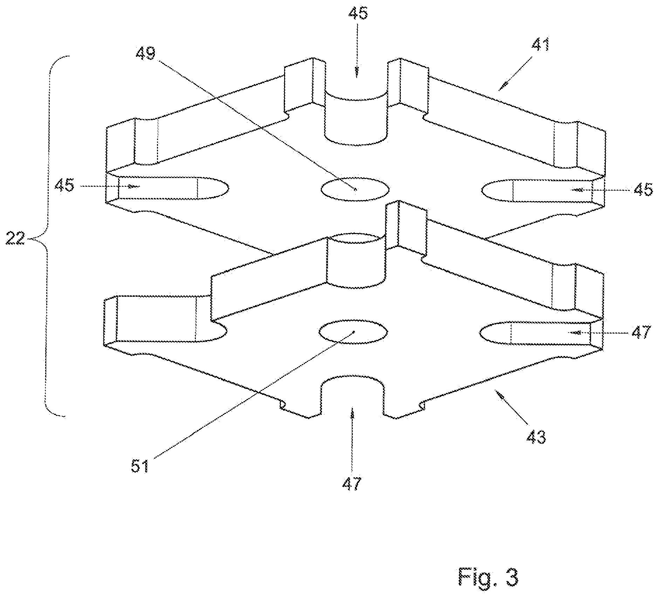

In Figure 3 a possible embodiment of the turning block 22 is shown in an exploded arrangement. The turning block 22 is seen to comprise an upper level disk 41 and a lower level disk 43. The upper level disk 41 has a generally square perimeter, interrupted by four diagonally extending slots 45 opening into the corners of the square perimeter and extending inwardly there from. The lower level disk 43 is similarly shaped to the upper level disk 41, but is substantially shorter on one of its sides and thereby effectively only has two diagonally extending slots 47. The upper and lower level disks 41, 43 each have a respective central bore 49, 51.

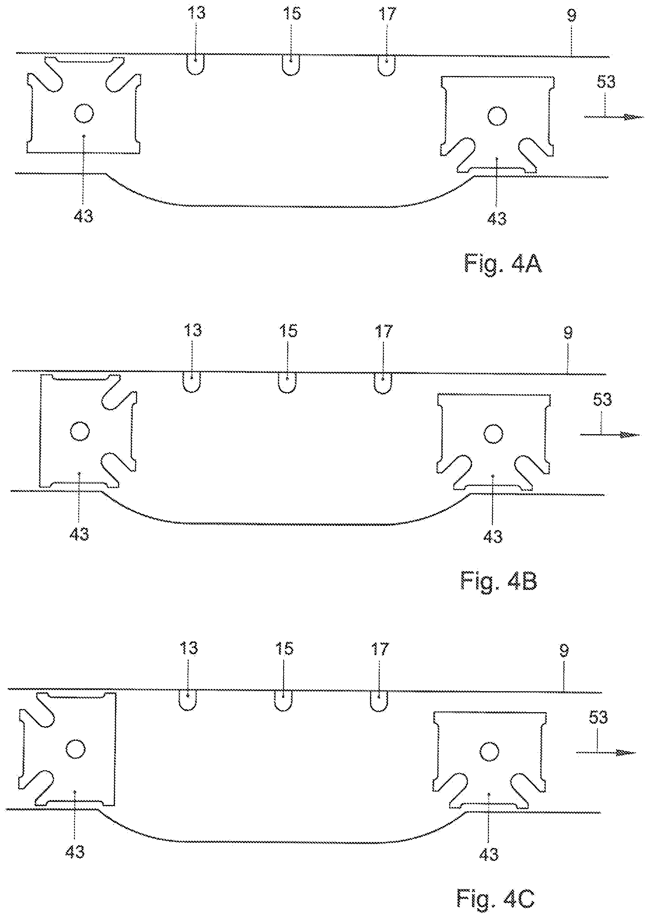

In figures 4A-4C it is schematically shown that the lower level disk 43, irrespective of the rotative position in which it meets the first, second and third turning pins 13, 15, 17 in the direction of conveyance 53, will end up in the predetermined position. As can be seen in either one of the Figures 4A, 4B and 4C the position of the lower level disk 43 after passing the first, second and third turning pins 13, 15, 17 is exactly the same. This may be used to correct the rotative positions of the article supports (carriages 5 in Figure 1 and the shackle 21 of Figure 2) before these are conveyed towards a treatment station that may be positioned along the path of conveyance or the conveyor.

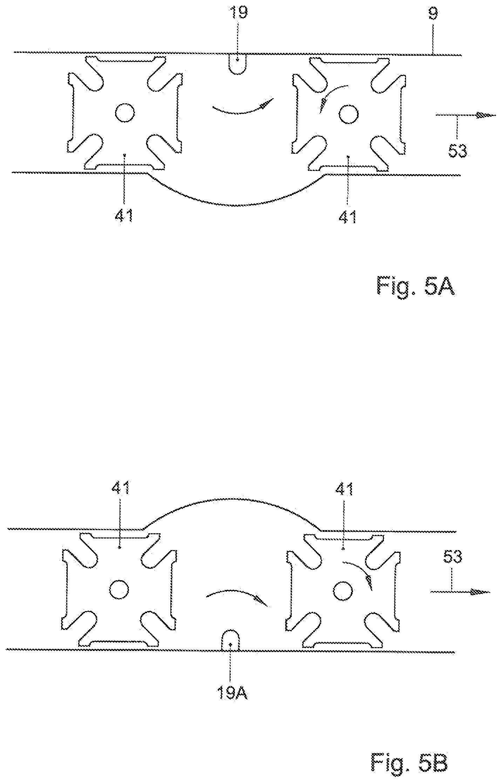

Figures 5A and 5B are schematic representations, similar to Figure 4, but showing the upper level disk 41 being rotated through 90 degree increments. This rotation in increments of 90 degrees can be in a left hand rotational direction by fourth turning pin 19 or alternatively in a right hand rotational direction by a fourth turning pin 19A that extends from an opposite side of the conveying path, as shown in Figure 5B.

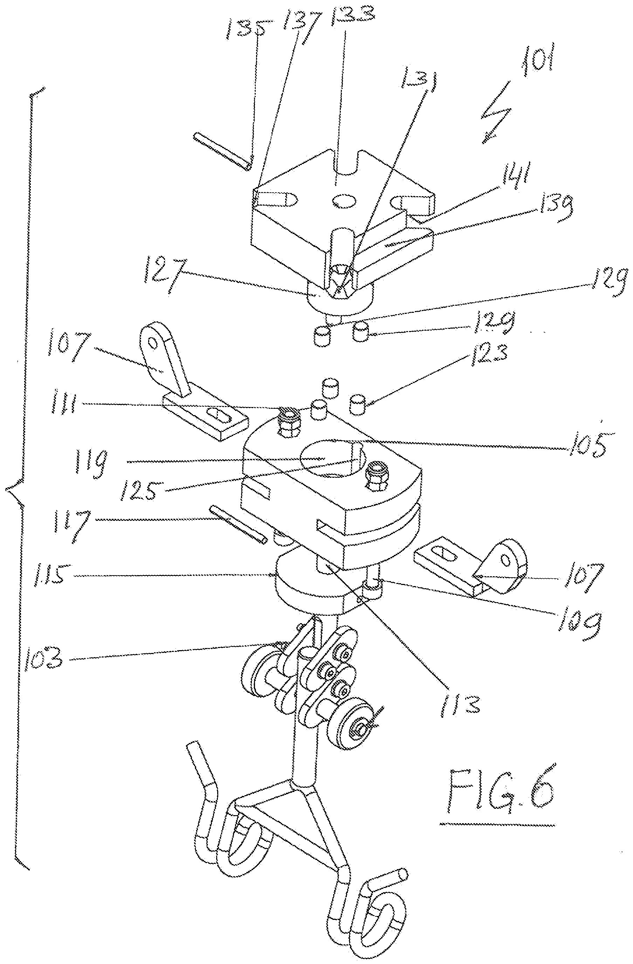

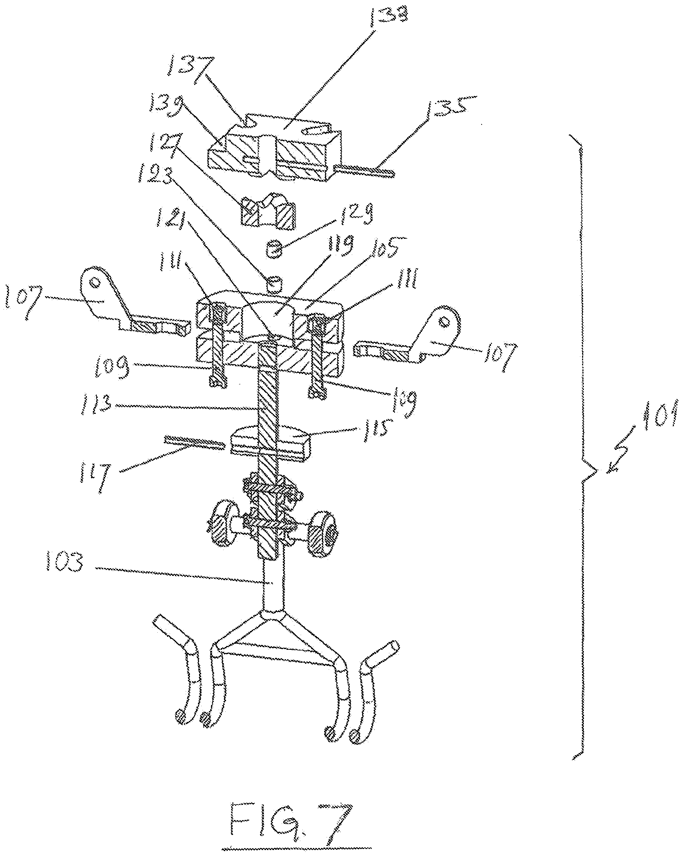

In Figure 6 an exploded arrangement is shown of a rotatable article support assembly 101. The article support assembly 101 is provided with a shackle 103, which in this example is a so called weighing shackle for the suspension of animal carcasses, such as fowl or poultry carcasses. The shackle 103 is rotatably suspended from a base block 105. The base block 105 is arranged for movement along an overhead conveyor rail or track (not shown, but conventional). Such conveyor rails or tracks are common in industrial apparatuses for carrying out a succession of processing steps. Commonly such conveying tracks are laid out in a continuous loop that defines a path of conveyance along a plurality of processing stations. Such systems are well known in the meat processing industry, but are also used in other disciplines of industry and manufacture. In this regard the base block 105 forms a trolley or carriage that is linked to similar base blocks of adjacent article support assemblies by trolley brackets 107 and chains, or the like. The trolley brackets 107 are attached to the base block 105 by means of bolts 109 and nuts 111. Extending upwardly from shackle 103 is a shaft 113 to which an abutment flange 115 is attached by means of a first transverse pin 117. The shaft 113 extends upwardly through a central bore in the base block 105, which central is enlarged at the upper end of the base block 105 to form a cavity 119. The cavity 119, as best seen in Figure 7, has three bores 121 (only one being visible in Figure 7) for each receiving a lower magnet 123. The cavity 119 has a groove 125 for non-rotatably receiving an indexing plunger 127 which has its perimeter adapted to the contour of cavity 119 to inhibit relative rotation but to allow axial movement of the plunger 127.

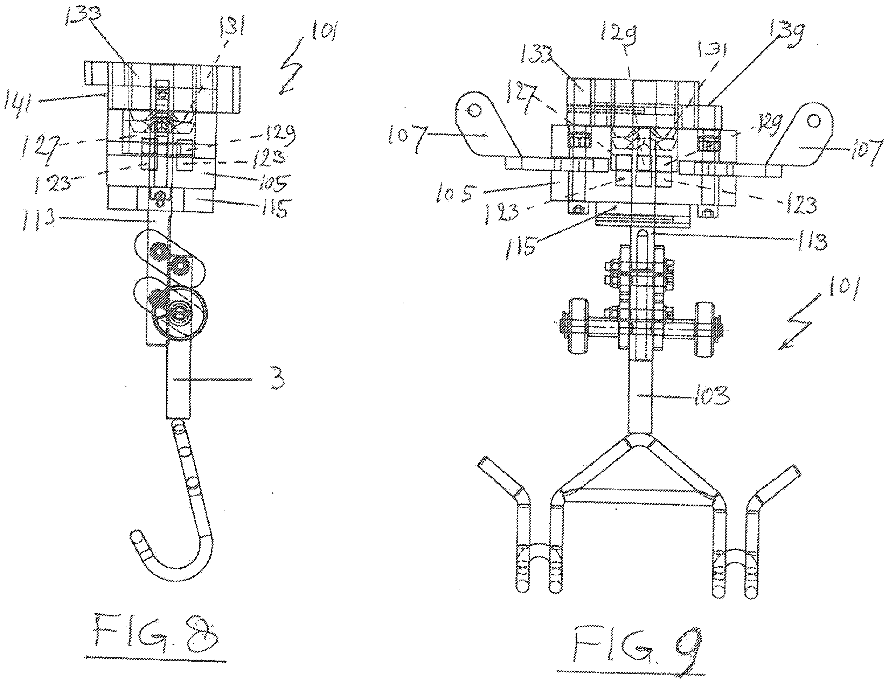

Not visible in Figures 6 and 7, but visible in the ghost views of Figures 8 and 9, the indexing plunger 127 has bores opening into its bottom surface for receiving upper magnets 129. In this example the lower magnets 123 are positioned with their north poles on top and the upper magnets 129 are positioned with their north poles facing down. In such an orientation, the lower and upper magnets 123, 129 will repulse one another, so that the indexing plunger 127 carries a number of radial indexing formations 131, which cooperate with complementary indexing formation on a lower face of a turning gear, or turning block 133. In this example, the indexing formations 131 provide rotational positions that are 90° apart. The turning block 133 is mounted to the shaft 113 by means of a second transverse pin 135. Spacing between transverse bore in the shaft 113 for receiving the first and second transverse pins 117, 135 is such that the base block 105 is snugly and rotatably received between the abutment flange 115 and the turning block 133. Thereby also the indexing plunger 127 is held within the cavity 119 of the base block 105 against the repulsive forces of the confronting lower and upper magnets 123, 129. The magnets 123, 129 are preferably identical and sintered rare earth magnets. Such sintered rare earth magnets may contain neodymium or be ceramic magnets of ferrous material. Another suitable magnet material may be samarium cobalt. The polarity of the lower and upper magnets 123, 129 should be properly directed to obtain the repulsive force necessary to bias the indexing formation 131 in engagement with the turning block 133. This can be with the north poles of confronting magnets facing one another, but may also be achieved by having the south poles facing one another. The important aspect is that equal poles of confronting magnets are facing one another. The turning block 133 further has diagonal slots 137 extending diagonally inwardly from each corner of the substantially square contour of the turning block 133.

In Figures 8 and 9 a side and a rear elevation of the assembled article support assembly 101 are illustrated as ghost views. Thereby internal parts like the magnets 123, 129, the indexing plunger 127 and the indexing formations 131 are visible as if the base block 105 and the turning block 133 were of transparent material. Also best visible in Figures 8 and 9 is that the turning block 133 has an upper cut-out 139 along one edge extending between adjacent slots 137, as well as a lower cut-out 141 along another edge that is perpendicular to the one edge.

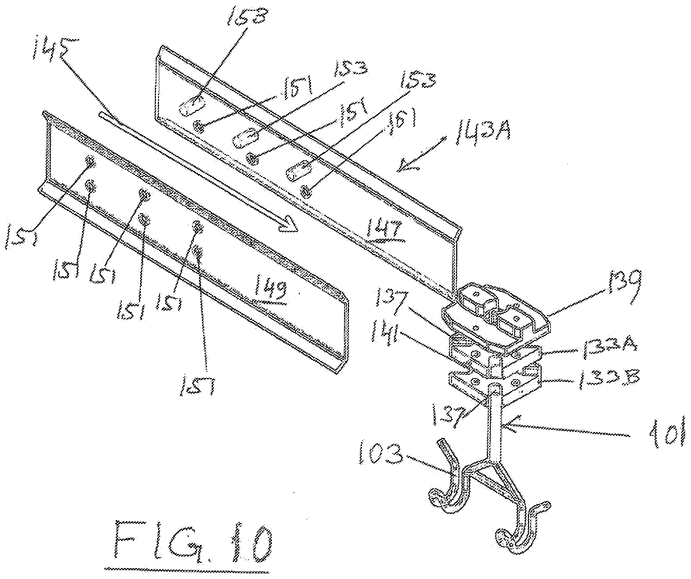

The purpose of the upper and lower cut-outs will now be described in reference to Figures 10 to 13. In Figures 10 to 13 several output positions are shown for the article support assembly 101, after having passed a particular aligning, or turning station 143A, 143B, 143C, 143D in a direction of conveyance indicated by arrow 145. The representation of Figures 10 to 13 is essentially schematic and structure that is not directly relevant to a correct understanding of the disclosure, is omitted for clarity. Also the article support assembly 101 is shown in a simplified form with the turning block 133 separated in two levels of disks 133A, 133B to better visualise the upper and lower cut-outs 139, 141. Each of the turning stations 143A-143D has opposed left and right hand guiding walls 147, 149. Each right hand guiding wall 147, 149 has a series of openings 151 in a upper and a lower row, each consisting of three openings 151. Each opening 151 is adapted to selectively receive a turning pin 153. As shown in Figure 10, three turning pins 153 are successively arranged in the upper row of openings 151 of the left hand guiding wall 47. Irrespective of the rotational position of the article support assembly 101 when it enters the turning station 143A, the three successive turning pins 153 in the upper row will always be sufficient to engage as many of the diagonal slots 137 as is necessary to bring the upper cut-out 139 (in level 133A of the turning block) in a position facing the left hand guide rail 147, once it has passed all three turning pins 153.

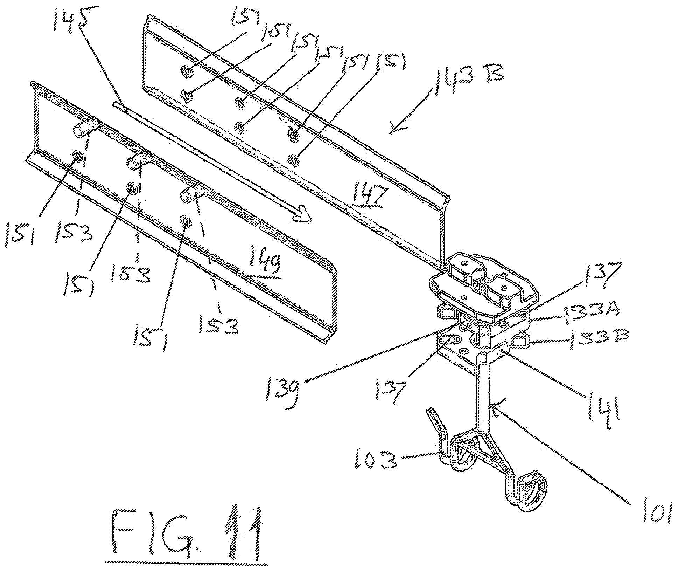

As shown in Figure 11, three turning pins 153 are now mounted in the upper row of three opening 151 of the right hand guiding wall 149. This has the effect that article supported assembly 101 will now leave the turning station 143B with the upper cut-out 139 facing the right hand guiding wall 149. This results in a different position of the shackle 103 than that achieved with the turning station 143A of Figure 10.

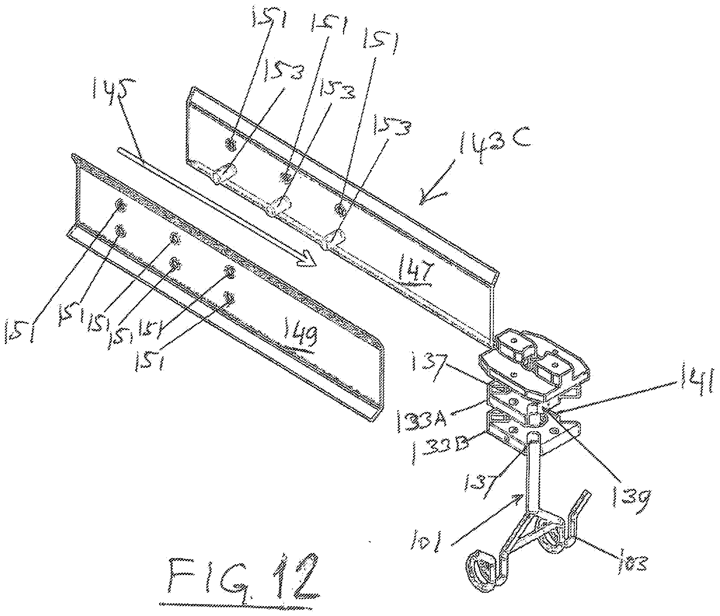

In Figure 12 again a different arrangement of turning station 143C is shown. In this variation the three successive turning pins 153 are positioned in the lower row of opening 151 of the left hand guiding wall 147. The pins 153 now engage the diagonal slots 137 at the lower portion 133B of the turning block. Upon passage of the article support assembly 101 through the turning station 143C in the direction 145 of conveyance, the lower cut-out 141 will emerge from the turning station 143C, facing the left hand guide wall 147.

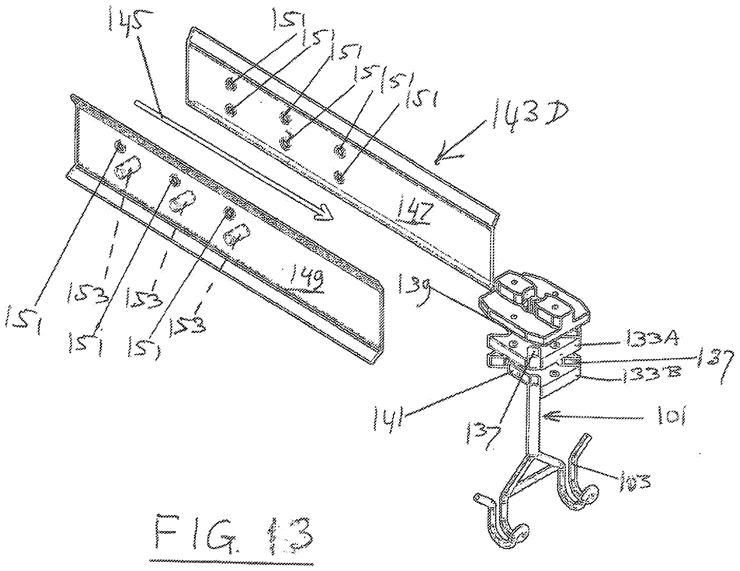

In a further variation according to Figure 13, the turning station 143D has the successive turning pins 153 installed on the lower row of openings 151 in the right hand guide wall 149. This results in the lower cut-out 141 of the lower portion 133B of the turning block to emerge from the turning station 143D facing the right hand side wall 149. While one level of turning pins 153 that are 180° apart, using a second level for positioning the turning pins and a second cut-out at 90° from the first cut-out, enables positioning of the article support assembly 101 at predetermined position at 90°.

Accordingly an article support assembly 101 is disclosed that is adapted for movement by a conveyor along a path of conveyance. The article support assembly 101 includes a trolley 105 for engagement by the conveyor and a shackle 103 configured to support an article, and rotatable with respect to the trolley. A turning block 133 is associated with the shackle 103, and rotation of the turning block with respect to the trolley 105 causes corresponding rotation of the shackle relative to the trolley. Yieldable indexing means 123, 127, 129, 131 are operatively arranged between the trolley 105 and the turning block 133 to define at least a first and a second incremental rotational position for the shackle 103. The yieldable indexing means 123, 127, 129, 131 of the article support assembly 101 are biased into engagement by magnetic repelling forces. A conveyor system for conveying articles along processing stations is adapted to include the article support assembly 101 and comprises a turning station 143A, 143B, 143C, 143D for giving a predetermined rotational position to the shackle 3 with respect to the trolley 105.

While it has been described in the above example that the indexing plunger 127 and the turning block providing the yieldable indexing means are biased into engagement by magnetic repelling forces, it is alternatively also possible to obtain this bias by attracting magnetic forces. This effect can be obtained by positioning lower magnet in the indexing plunger 127, and accommodating upper magnets in suitable bores in the turning block 133, but with the confronting lower and upper magnets then positioned to have their opposite poles facing one another.

It is thus believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope, within the limitations set by the appended claims. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims.

## Claims

1. Conveyor for moving and positioning objects along a conveyor path,
the conveyor including:
a conveyor rail (1) extending through a predefined conveying path;
at least one carriage (5) movable along the conveyor rail;
a rotatable article support associated with the at least one carriage;
a turning block (22) associated with the rotatable article support, to allow rotatable movement of the article support relative to the at least one carriage; and
an aligning station (9) for rotating the article support into a predetermined position,
wherein the turning block has a first level disk (41) with a first perimeter contour and a second level disk (43) with a second perimeter contour,
wherein the alignment station has means (31) for selectively engaging at least the second level disk in response to movement of the turning block through the aligning station to rotatingly aligning the article support into the predetermined position,
wherein the aligning station includes a series of first, second and third turning pins (13, 15, 17, 19) arranged in a row that coincides with a level of a plane through the second level disk,
wherein the aligning station has a first row of openings (11) aligned in a plane through the first level disk and a second row of openings aligned in the plane through the second level disk, and
wherein each of the first and second rows of openings is adapted to receive any one of at least the first, second and third turning pins for engaging the second level disk and alternatively a fourth turning pin for engaging the first level disk.

2. Conveyor according to claim 1, wherein the first level disk is an upper level disk and the second level disk is a lower level disk.

3. Conveyor according to claim 1 or 2, wherein the first level disk and second level disk are formed as a single unitary element.

4. Conveyor according to any preceding claim, wherein the first level disk has a substantially square perimeter with slots extending diagonally inwardly from each of its four corners, and wherein the second level disk has a substantially rectangular perimeter with only two slots extending diagonally inwardly from two of its corners.

5. Conveyor assembly for conveying articles along processing stations including a conveyor in accordance with one of the preceding claims and wherein the aligning station is a turning station and wherein the at least one carriage and associated article support include a trolley for engagement by the conveyor; a shackle configured to support an article, and rotatable with respect to the trolley; a turning block associated with the shackle, rotation of the turning block with respect to the trolley causing corresponding rotation of the shackle relative to the trolley; and yieldable indexing means operatively arranged between the trolley and the turning block to define at least a first and a second incremental rotational position for the shackle, in which the yieldable indexing means are biased into engagement by magnetic forces.

6. Conveyor assembly according to claim 5, wherein the turning block has a substantially rectangular perimeter contour with diagonal slots extending radially inwardly from each corner, further includes an upper cut-out along one perimeter edge extending between adjacent slots, and a lower cut-out extending along another perimeter edge that is perpendicular to the one perimeter edge, and wherein the turning station includes a succession of three turning pins positioned to engage a predetermined selection of diagonal slots of the turning block as well as allowing passage of at least one of the upper and lower cut-outs.

7. Conveyor assembly according to claim 6, wherein the turning pins are selectively mountable in upper and lower rows of openings provided in one of a right hand and left hand guide wall.

8. Conveyor or conveyor assembly according to any preceding claim, wherein it is an animal carcass conveyor for use in a poultry and/or fowl processing line.

## Patentansprüche

1. Förderer zum Bewegen und Positionieren von Objekten entlang eines Förderweges,
der Förderer einschließend:
eine Förderschiene (1), sich erstreckend durch einen vordefinierten Förderweg;
mindestens einen Schlitten (5), der entlang der Förderschiene beweglich ist;
einen drehbaren Artikelträger, verbunden mit dem mindestens einen Schlitten;
einen Drehblock (22), verbunden mit dem drehbaren Artikelträger, um eine Drehbewegung des Artikelträgers in Bezug auf mindestens einen Schlitten zu ermöglichen; und
eine Ausrichtungsstation (9) zum Drehen des Artikelträgers in eine vorbestimmte Position,
wobei der Drehblock eine erste Niveauscheibe (41) mit einer ersten Umfangkontur und eine zweite Niveauscheibe (43) mit einer zweiten Umfangkontur aufweist,
wobei die Ausrichtungsstation Mittel (31) aufweist, um selektiv mindestens in die zweite Niveauscheibe einzugreifen, in Antwort auf die Bewegung des Drehblocks durch die Ausrichtungsstation zum drehenden Ausrichten des Artikelträgers in die vorbestimmte Position,
wobei die Ausrichtungsstation eine Serie von ersten, zweiten und dritten Drehstiften (13, 15, 17, 19) einschließt, die in einer Reihe angeordnet sind, die deckungsgleich mit einem Niveau einer Ebene durch die zweite Niveauscheibe ist,
wobei die Ausrichtungsstation eine erste Reihe von Öffnungen (11), ausgerichtet in einer Ebene durch die erste Niveauscheibe, und eine zweite Reihe von Öffnungen, ausgerichtet in der Ebene durch die zweite Niveauscheibe, aufweist, und
wobei jede der ersten und zweiten Reihen von Öffnungen geeignet ist, einen beliebigen der mindestens ersten, zweiten und dritten Drehstifte zum Eingreifen in die zweite Niveauscheibe und alternativ einen vierten Drehstift zum Eingreifen in die erste Niveauscheibe aufzunehmen.

2. Förderer nach Anspruch 1, wobei die erste Niveauscheibe eine obere Niveauscheibe und die zweite Niveauscheibe eine untere Niveauscheibe ist.

3. Förderer nach Anspruch 1 oder 2, wobei die erste Niveauscheibe und die zweite Niveauscheibe als ein einziges einheitliches Element geformt sind.

4. Förderer nach einem der vorhergehenden Ansprüche, wobei die erste Niveauscheibe einen im Wesentlichen quadratischen Umfang hat, mit Schlitzen, die sich diagonal nach innen von jeder ihrer vier Ecken erstrecken, und wobei die zweite Niveauscheibe einen im Wesentlichen rechteckigen Umfang hat, mit nur zwei Schlitzen, die sich diagonal nach innen von zwei ihrer Ecken erstrecken.

5. Fördereranordnung zum Befördern von Artikeln entlang Verarbeitungsstationen, einschließend einen Förderer nach einem der vorhergehenden Ansprüche, und wobei die Ausrichtungsstation eine Drehstation ist und wobei der mindestens eine Schlitten und der verbundene Artikelträger einen Wagen zum Eingreifen durch den Förderer einschließt; einen Bügel, konfiguriert zum Stützen eines Artikels und drehbar in Bezug auf den Wagen; einen Drehblock, verbunden mit dem Bügel, wobei die Drehung des Drehblocks in Bezug auf den Wagen eine entsprechende Drehung des Bügels in Bezug auf den Wagen verursacht; und nachgiebige Indexiermittel, operativ angeordnet zwischen dem Wagen und dem Drehblock, um mindestens eine erste und eine zweite inkrementale Drehposition für den Bügel zu definieren, in der die nachgiebigen Indexiermittel durch Magnetkräfte in Neigungseingriff gebracht werden.

6. Fördereranordnung nach Anspruch 5, wobei der Drehblock eine im Wesentlichen rechteckige Umfangkontur hat, mit diagonalen Schlitzen, die sich radial nach innen von jeder Ecke erstrecken, ferner einen oberen Ausschnitt entlang einer Umfangkante, sich erstreckend zwischen benachbarten Schlitzen, und einen unteren Ausschnitt, sich erstreckend entlang einer anderen Umfangkante, die senkrecht zu der einen Umfangkante ist, und wobei die Drehstation eine Aufeinanderfolge von drei Drehstiften einschließt, die positioniert sind, um in eine vorbestimmte Auswahl von diagonalen Schlitzen des Drehblocks einzugreifen und um den Durchgang von mindestens einem der oberen und unteren Ausschnitte zu erlauben.

7. Fördereranordnung nach Anspruch 6, wobei die Drehstifte selektiv in oberen und unteren Reihen von Öffnungen, die in einer von einer rechten und linken Führungswand bereitgestellt sind, montierbar sind.

8. Förderer oder Förderanordnung nach einem der vorhergehenden Ansprüche, wobei es sich um einem Tierkörperförderer zur Verwendung in einer Verarbeitungslinie für Geflügel und/oder Federvieh handelt.

## Revendications

1. Transporteur destiné à déplacer et à positionner des objets le long d'un trajet de transporteur, le transporteur comprenant :
un rail de transporteur (1) qui s'étend sur un trajet de transport prédéfini ;
au moins un chariot (5) mobile le long du rail de transporteur ;
un support d'article rotatif associé au chariot au moins ;
un bloc vireur (22) associé au support d'article rotatif, destiné à permettre un mouvement de rotation du support d'article par rapport au chariot au moins ; et
un poste d'alignement (9) destiné à faire tourner le support d'article dans une position prédéterminée,
dans lequel le bloc vireur possède un disque de premier niveau (41) avec un premier contour périphérique et un disque de second niveau (43) avec un second contour périphérique,
dans lequel le poste d'alignement possède un moyen (31) destiné à engager sélectivement au moins le disque de second niveau en réponse au mouvement du bloc vireur par le biais du poste d'alignement, afin d'aligner par rotation le support d'article dans la position prédéterminée,
dans lequel le poste d'alignement comprend une série d'une première, d'une seconde et d'une troisième goupilles rotatives (13, 15, 17, 19) prévues sur une rangée qui coïncide avec un niveau d'un plan qui passe par le disque de second niveau,
dans lequel le poste d'alignement possède une première rangée d'ouvertures (11) alignées sur un plan qui passe par le disque de premier niveau, et une seconde rangée d'ouvertures alignées sur le plan qui passe par le disque de second niveau, et
dans lequel chacune de la première et de la seconde rangées d'ouvertures est adaptée pour recevoir n'importe laquelle d'au moins la première, la seconde et la troisième goupilles rotatives afin d'engager le disque de second niveau et, en variante, une quatrième goupille rotative destinée à engager le disque de premier niveau.

2. Transporteur selon la revendication 1, dans lequel le disque de premier niveau est un disque de niveau supérieur, et le disque de second niveau est un disque de niveau inférieur.

3. Transporteur selon la revendication 1 ou 2, dans lequel le disque de premier niveau et le disque de second niveau sont formés comme un seul élément unitaire.

4. Transporteur selon l'une quelconque des revendications précédentes, dans lequel le disque de premier niveau possède un périmètre sensiblement carré avec des fentes qui s'étendent en diagonale vers l'intérieur depuis chacun de ses quatre angles, et dans lequel le disque de second niveau possède un périmètre sensiblement rectangulaire avec seulement deux fentes qui s'étendent en diagonale vers l'intérieur depuis deux de ses angles.

5. Ensemble de transport destiné à acheminer des articles le long de postes de traitement qui comprend un transporteur selon l'une des revendications précédentes, et dans lequel le poste d'alignement est un poste assurant un changement de direction, et dans lequel au moins un chariot et le support d'article associé comprennent un panier destiné à être engagé par le transporteur ; une manille configurée pour supporter un article, et rotative par rapport au panier ; un bloc vireur associé à la manille, la rotation du bloc vireur par rapport au panier provoquant la rotation correspondante de la manille par rapport au panier ; et un moyen d'indexation élastique prévu entre le panier et le bloc vireur afin de définir au moins une première et une seconde positions de rotation incrémentielles pour la manille, le moyen d'indexation élastique étant incliné en engagement par des forces magnétiques.

6. Ensemble de transport selon la revendication 5, dans lequel le bloc vireur possède un contour périphérique sensiblement rectangulaire avec des fentes diagonales qui s'étendent radialement vers l'intérieur depuis chaque angle, et comprend en outre une découpe supérieure le long d'un bord périphérique s'étendant entre des fentes adjacentes, et une découpe inférieure qui s'étend le long d'un autre bord périphérique qui est perpendiculaire au bord périphérique, et dans lequel le poste assurant un changement de direction comprend une succession de trois goupilles rotatives positionnées afin d'engager une sélection prédéterminée de fentes diagonales du bloc vireur, et de permettre le passage d'au moins l'une des découpes supérieure et inférieure.

7. Ensemble de transport selon la revendication 6, dans lequel les goupilles rotatives peuvent être montées de manière sélective dans les rangées supérieures et inférieures d'ouvertures prévues dans l'une d'une paroi de guide droite et gauche.

8. Ensemble de transport selon l'une quelconque des revendications précédentes, qui est un transporteur de carcasses d'animaux destiné à être utilisé sur une chaîne de traitement de volailles et/ou de poules.
